# EUROPÄISCHE PATENTSCHRIFT

(11) **EP 0 448 815 B1**
(45) Veröffentlichungstag und Bekanntmachung des Hinweises auf die Patenterteilung: **28.09.1994**
(21) Anmeldenummer: 90124689.2
(22) Anmeldetag: 19.12.1990
(51) Int. Cl.: C09B 62/04

(54) **Triphendioxazinfarbstoffe**
Triphenyl dioxazine dyes
Colorants triphényldioxaziniques

(30) Priorität: 30.03.1990 DE 4010223
(43) Veröffentlichungstag der Anmeldung: 02.10.1991
(73) Patentinhaber: BAYER AG, 51368 Leverkusen (DE)
(72) Erfinder: Jäger, Horst, Dr., W-5090 Leverkusen (DE)

(56) Entgegenhaltungen:
- EP-A- 0 170 838
- EP-A- 0 229 339
- FR-A- 2 297 232
- GB-A- 2 228 738

## Beschreibung

Die Erfindung betrifft neue Triphendioxazinfarbstoffe, Verfahren zu ihrer Herstellung sowie ihre Verwendung zum Färben und Bedrucken cellulosehaltiger und amidgruppenhaltiger Materialen.

Die neuen Triphendioxazinfarbstoffe sind durch die Formel 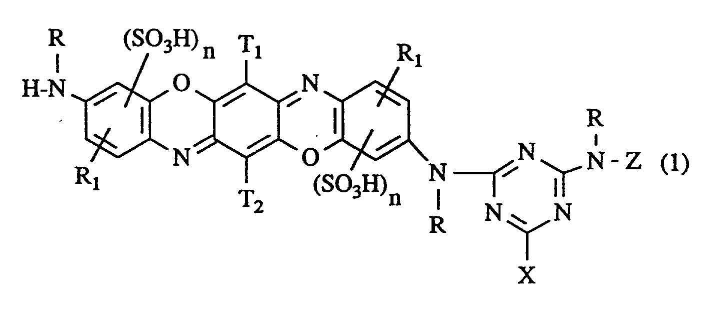
allgemein definiert,
in welcher
- R: für Wasserstoff der gegebenenfalls substituiertes C₁-C₆-Alkyl steht,
- R₁: für Wasserstoff, Halogen, C₁-C₄-Alkyl, C₁-C₄-Alkoxy oder COOH steht.
- T₁ und T₂: jeweils für Wasserstoff, Chlor, Brom, gegehe nenfalls substituiertes C₁-C₄-Alkyl, gegebenenfalls substituiertes C₁-C₄-Alkoxy, gegebenenfalls substituiertes Phenyl oder gegebenenfalls substituiertes Phenoxy stehen,
- X: für einen abspaltbaren Rest wie beispielsweise Fluor, Chlor, Brom, Sulfo, Methylsulfonyl, Ethylsulfonyl oder gegebenenfalls durch Sulfo, Carboxy, Sulfamoyl oder Carbamoyl substituiertes Pyridyl steht,
- Z: für Z₁ oder Z₂ steht, wobei
- Z₁: für die Gruppierung 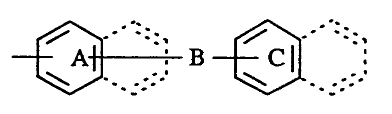 steht,
worin
- A: für einen gegebenenfalls substituierten Phenylen- oder Naphthylenrest steht und
- C: für einen gegebenenfalls substituierten Phenyl- oder Naphthylrest steht,
und
- B: für eine direkte Bindung oder ein Brückenglied der Formel 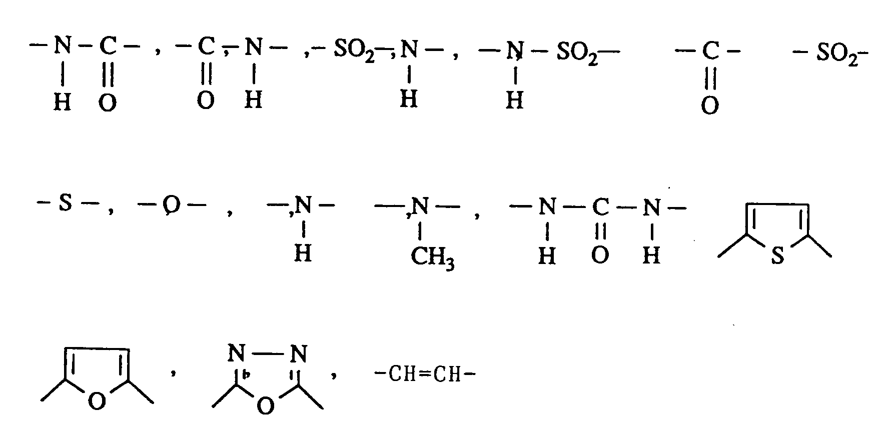 steht,
- Z₂: für 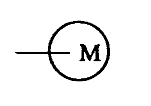 steht,
worin
- M: für den Rest eines mindestens zwei kondensierte 5- und/oder 6-Ringe enthaltenden heterocyclischen Ringsystems steht, vorzugsweise für einen der folgenden Reste: 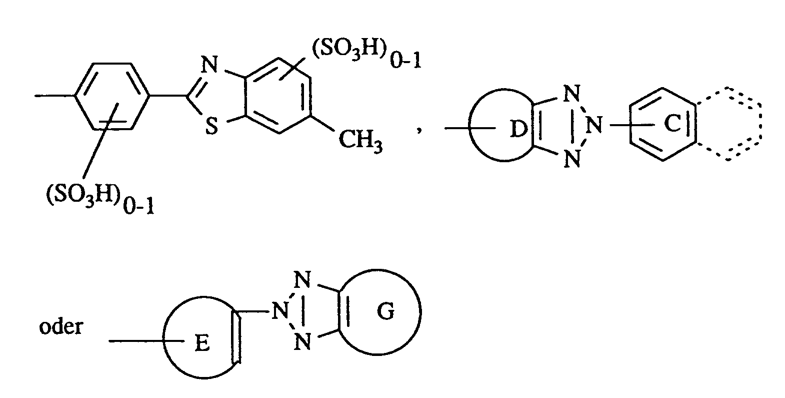 wobei
- C: die oben angegebene Bedeutung hat,
- D und E: jeweils für den Rest eines gegebenenfalls substituierten Phenylen-oder Naphthylenringes stehen und
- G: für den Rest eines gegebenenfalls substituierten Benzol-oder Naphthalinringes steht;
- n: für 0 oder 1 steht,
wobei für den Fall daß
n für 1 steht, die Sulfogruppen jeweils in orto-Stellung zu den Substituenten 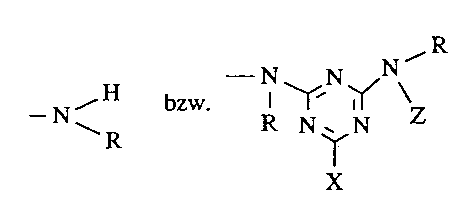 stehen.

Die Reste R, R₁, T₁ und T₂ können gleich oder verschieden sein. Substituenten der gegebenenfalls substituierten C₁-C₄-Alkyl- und C₁-C₄-Alkoxyreste T₁ bzw. T₂ sind beispielsweise C₁-C₄-Alkyl oder -SO₃H.

Substituenten der gegebenenfalls substituierten Phenyl- und Phenoxyreste T₁ bzw. T₂ sind beispielsweise Chlor, Brom, C₁-C₄-Alkyl oder -SO₃H.

Geeignete Substituenten R₁ sind beispielsweise folgende: Halogen wie beispielsweise Chlor, C₁-C₄-Alkyl, C₁-C₄-Alkoxy, -COOH.

Der Rest Z enthalt bevorzugt 1 bis 4 wasserlöslichmachende Gruppen, insbesondere eine Sulfonsäure- und/oder eine Carbonsäuregruppe. Weitere wasserlöslichmachende Gruppen sind die Sulfato- oder Disulfimidgruppe.

Substituenten der Ringe A, C, D, E, G und M sind beispielsweise: Halogenatome wie Fluor, Chlor oder Brom, C₁-C₄-Alkyl, C₁-C₄-Alkoxy, Nitro, Sulfo, Carboxy, Hydroxy, C₁-C₄-Alkylcarbonylamino, gegebenenfalls durch Chlor, Methoxy, Methyl substituiertes Phenylcarbonylamino, Phenylureido, Ureido. Insbesondere kann der Ring C auch durch Phenyl- und Naphthylazogruppen substituiert sein.

Im Rahmen der Formel (1) bevorzugte Farbstoffe entsprechen der Formel 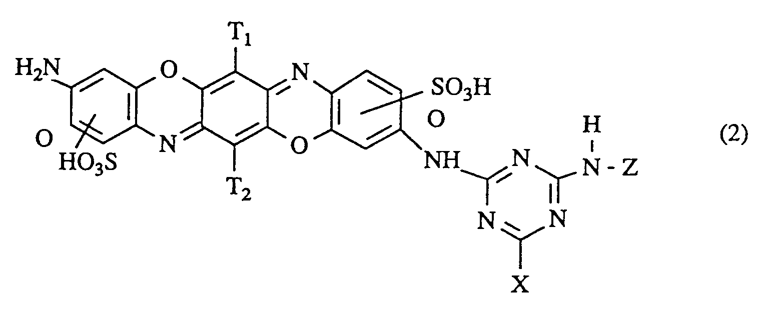
Weiterhin sind Farbstoffe der Formel (1) oder (2) bevorzugt, in denen
- T₁ und T₂: jeweils für Chlor oder Methoxy stehen und
- X: für Fluor, Chlor oder Sulfo steht.

Die neuen Triphendioxazinfarbstoffe der Formel (1) können hergestellt werden, indem man entweder
a) 1 Mol eines Triphendioxazinfarbstoffes der Formel 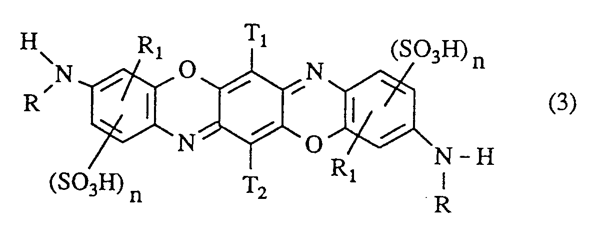 in welcher
   - R, R₁, T₁, T₂ und n: die oben angegebene Bedeutung haben,
   mit einem Mol eines Halogentriazins der Formel 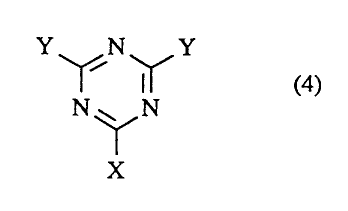 in welcher
   - Y: für Fluor, Chlor oder Brom steht und
   - X: die oben angegebene Bedeutung hat, vorzugsweise für Halogen steht,
   zu einem Monoacylierungsprodukt der Formel 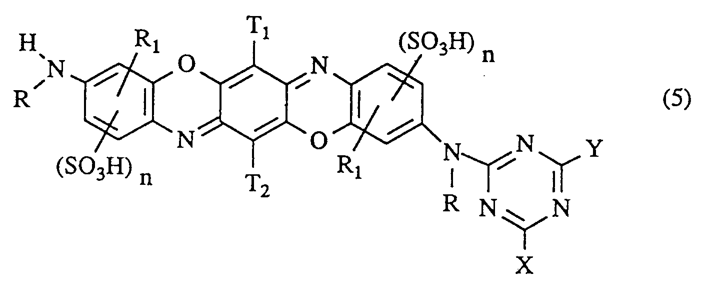 in welcher
   - R, R₁, T₁, T₂, X und n: die oben angegebene Bedeutung haben, und
   - Y: für Fluor, Chlor oder Brom steht
   umsetzt, und dieses dann mit einem Mol eines Amins der Formel 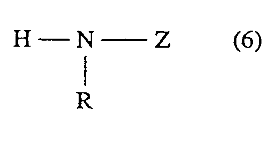 in welcher
   - R und Z: die oben angegebene Bedeutung haben,
   kondensiert, oder
b) ein Mol eines Amins der Formel (6) mit einem Mol Halogentriazin der Formel (4) zu einem Halogentriazin der Formel 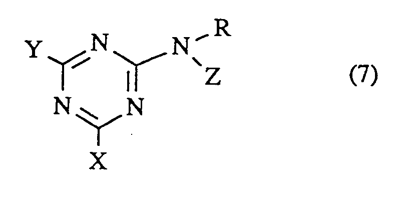 in welcher
   - R, X, Y und Z: die oben angegebene Bedeutung haben,
   umsetzt, und dieses dann mit einem Mol eines Triphendioxazinfarbstoffes der Formel (3) kondensiert.
   Steht in den Triphendioxazinfarbstoffen der Formel (1) der Substituent X für Halogen, so kann dieser in einer Austauschreaktion durch eine andere abspaltbare Gruppe, wie unter der Bedeutung von X definiert, ersetzt werden.

Die Kondensation der Farbstoffe (3) bzw. Amine (6) mit den Halogentriazinen (4) erfolgt vorzugsweise im wäßrigen oder wäßrig-organischen Medium und in Abhängigkeit von der Reaktivität des Halogentriazins bei Temperaturen von 0°C bis 40°C, wobei gegebenenfalls die bei der Kondensation freiwerdenden Halogenwasserstoffsäure durch Zugabe von säurebindenden Mitteln abgefangen wird.

Die weitere Kondensation der Monoacylierungsprodukte (5) bzw. (7) mit einem Amin (6) bzw. Farbstoff (3) wird gleichfalls in wäßrigem oder wäßrig-organischem Medium bei Temperaturen von 20°C bis 100°C ausgeführt, wobei der bei der Kondensation freiwerdende Halogenwasserstoff durch Zugabe von säurebindenden Mitteln neutralisiert wird. Säurebindende Mittel sind insbesondere die Alkali-oder Erdalkali-hydrogencarbonate, -carbonate, hydroxide, -phosphate oder -borate.

Der Austausch des Substituenten X mit der Bedeutung für Halogen in Farbstoffen der Formel (1) durch andere abspaltbare Gruppen wird ebenfalls in wäßrigem oder wäßrig-organischem Medium bei Temperaturen von 60°C bis 100°C ausgeführt, wobei der bei der Kondensation freiwerdende Halogenwasserstoff durch Zugabe von säurebindenden Mitteln neutralisiert wird.

Eine bevorzugte Herstellungsmethode besteht darin, daß man Farbstoffe (3) mit Cyanurchlorid zu Farbstoffen (5) mit X = Chlor kondensiert und dann das Chloratom gegen einen Rest -NRZ austauscht.

Für die Kondensationsreaktionen werden die Triphendioxazinfarbstoffe (3) vorzugsweise in Form ihrer neutralen Alkalisalze insbesondere ihrer Lithiumsalze eingesetzt.

Farbstoffe der Formel (3) sind aus der Literatur bekannt. So ist beispielsweise ihre Herstellung in der Europäischen Patentschrift 170 838 beschrieben.

Beispiele für Halogentriazine (4) sind:
2,4,6-Trichlortriazin (Cyanurchlorid)
2,4,6-Trifluortriazin
2,4,6-Tribromtriazin
Amine der Formel (6) für Z = Z₁ und Z₂ sind beispielsweise folgende 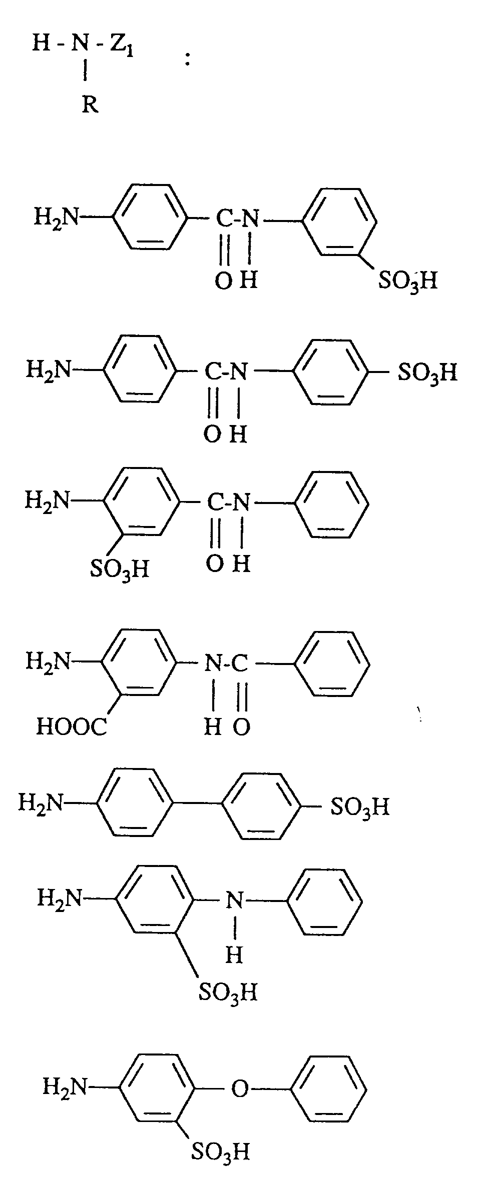 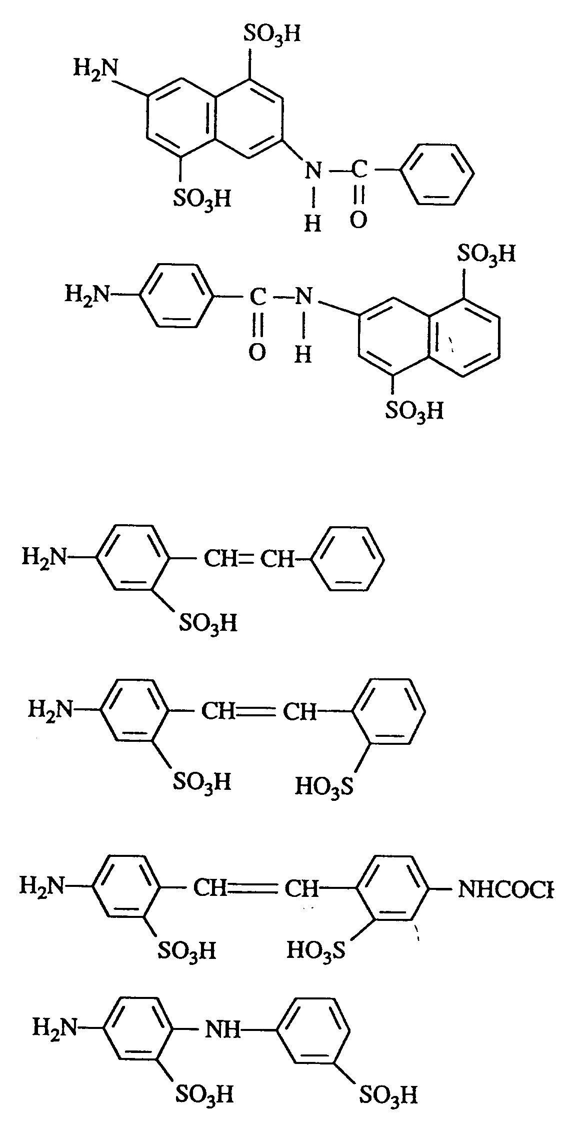 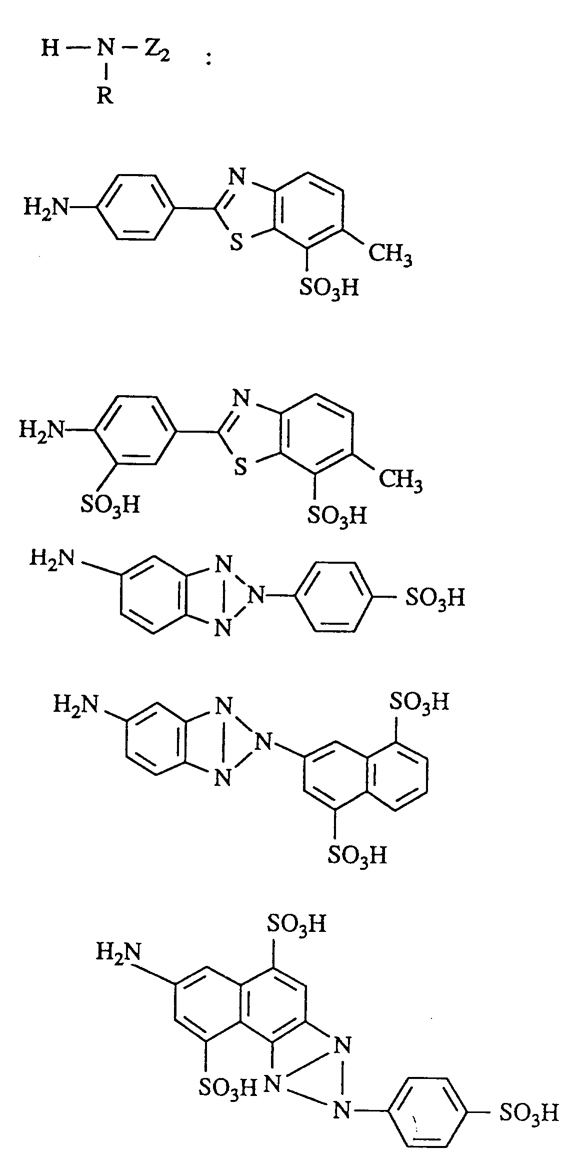 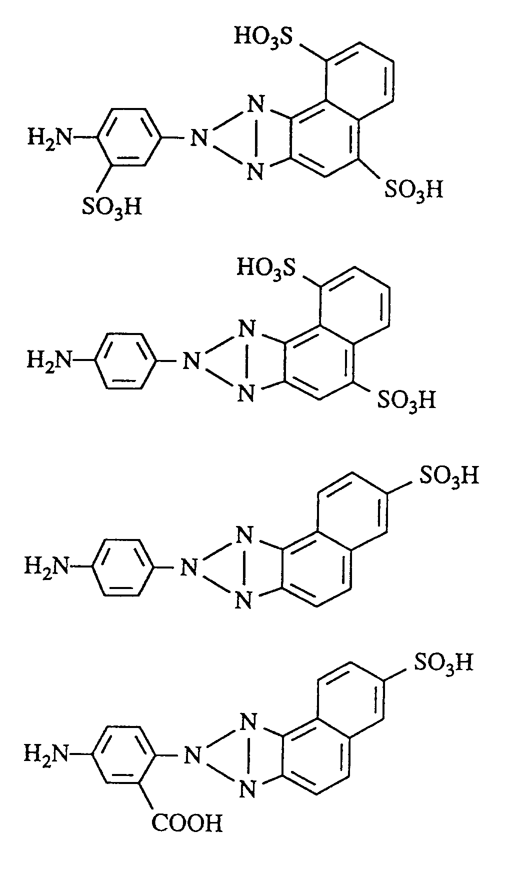 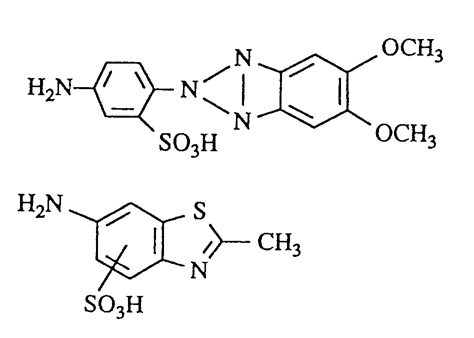
Die Farbstoffe werden z.B. durch Zugabe von Salz isoliert und getrocknet. Es können aber auch die Kondensationslösungen oder Suspensionen über einen Walzen- oder Sprühtrockner geführt werden.

Ebensogut können aus den feuchten Pasten der Farbstoffe konzentrierte, wäßrige Lösungen hergestellt werden, z.B. indem man Suspensionen oder Lösungen dieser Farbstoffe in Wasser einer Entsalzung, z.B. durch Druckpermeation unterwirft.

Die Farbstoffe färben cellulosehaltige Materialien, insbesondere Papier, Baumwolle und Viskose sowie Leder in blauen Tönen mit guten Naß- und Lichtechtheiten.

Die Farbstoffe können nach allen in der Papier- und Textilindustrie für substantive Farbstoffe gebräuchlichen Verfahren verwendet werden, insbesondere in der Massen- wie in der Oberflächenfärbung von Papier für geleimte und ungeleimte Sorten, ausgehend von gebleichten oder ungebleichten Zellstoff verschiedener Provenienz wie Nadel- oder Laubholz-sulfit- und/oder -Sulfat-Zellstoff. Sie können auch in der Garn- oder Stückfarberei von Baumwolle, Viskose und Leinen nach dem Ausziehverfahren aus langer Flotte oder in Kontinueverfahren angewandt werden.

Die mit den erfindungsgemäßen Farbstoffen erhaltenen Papierfärbungen zeichnen sich durch gute Licht- und Naßechtheit (Ausblutechtheit) aus. Auch auf die Brillanz und Klarheit der Farbtöne ist hinzuweisen. Ferner ist das Kombinationsverhalten mit geeigneten Farbstoffen sehr gut.

Die erfindungsgemäßen Farbstoffe eignen sich als saure Farbstoffe auch zum Färben von Wolle, Seide und synthetischen Polyamiden. Sie können auch nach allen für Reaktivfarbstoffe üblichen Farbverfahren eingesetzt werden.

Die Formeln der wasserlöslichen Farbstoffe in der Beschreibung und in den Beispielen sind die der freien Säuren. Isoliert und angewandt werden die Farbstoffe im allgemeinen in Form ihrer Alkalisalze, insbesondere der Lithium-, Natrium-oder Kaliumsalze.

Die in den Beispielen angegebenen Farbkennzahlen beziehen sich auf Colour Index Hue Indication Chart (Indicator Numbers).

Die in den folgenden Beispielen angegebenen Formeln beziehen sich auf jeweils eines der bei der Umsetzung entstehenden isomeren Reaktionsprodukte, wobei bezüglich der Substituenten in den beiden äußeren aromatischen Ringen des Triphendioxazin-Systems der isomeren Reaktionsprodukte auf das unter Formel (1) gesagte verwiesen wird.

### Beispiel 1

0,1 Mol 2,9-Diamino-6,13-dichlor-triphendioxazindisulfonsäure (erhalten nach Beispiel 1 der Europäischen Patentschrift 170 838) wurden in 1,5 l Wasser angerührt und mit Lithiumhydroxid neutralisiert, wobei der Farbstoff in Lösung ging. Man setzte dann 500 g Eis zu, streute 0,1 Mol Cyanurchlorid ein und rührte bei 0°C bis 5°C bis nur noch Spuren des Ausgangsmaterials vorhanden waren (dünnschichtchromatographische Kontrolle). Während der Acylierung hielt man durch Zutropfen von Lithiumhydroxidlösung den pH-Wert zwischen 6 und 7. Anschließend setzte man 0,1 Mol 4-Amino-N-(4'-sulfophenyl)-benzamid zu, erwärmte auf 50°C bis 60°C und hielt den pH-Wert durch Zutropfen von Lithiumhydroxidlösung bei pH 4,5 bis 5,5. Nach beendeter Kondensation wurde der Farbstoff durch Zugabe von 4 Volumen-% Natriumchlorid abgeschieden. Nach dem Absaugen, Trocknen und Mahlen erhielt man ein in Wasser mit klarer blauer Farbe lösliches Farbstoffpulver, das Baumwolle nach einem der für substantive Farbstoffe üblichen Färbeverfahren in klaren blauen Tönen färbt (Farbkennzahl 13). 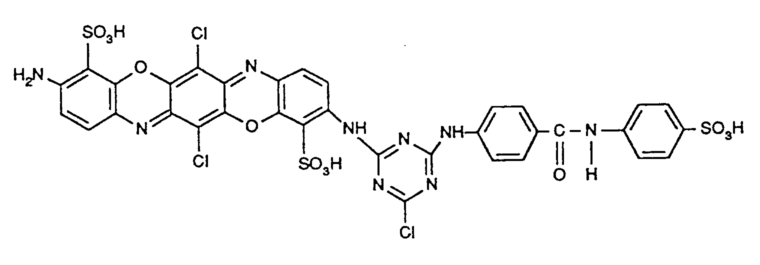
Weitere wertvolle Farbstoffe, die Baumwolle substantiv in klaren blauen Tönen färben (Farbkennzahl 13), erhält man analog zu den Angaben von Beispiel 1, wenn man anstelle des dort verwendeten Amins 4-Amino-N-(4'-sulfophenyl)-benzamid eine äquivalente Menge der nachfolgend aufgeführten Amine verwendet.

### Beispiel

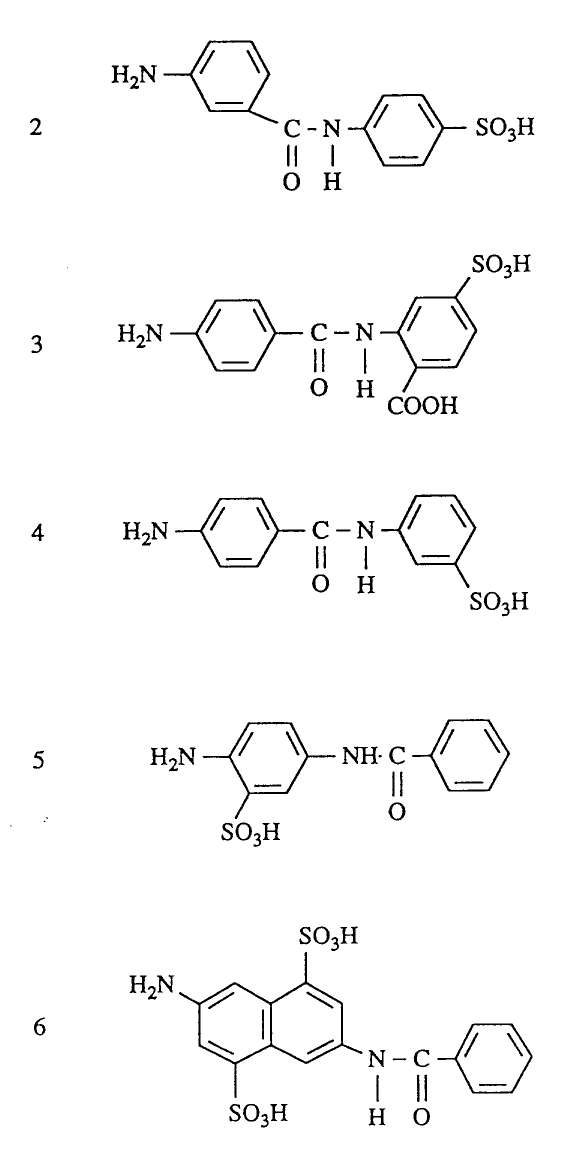

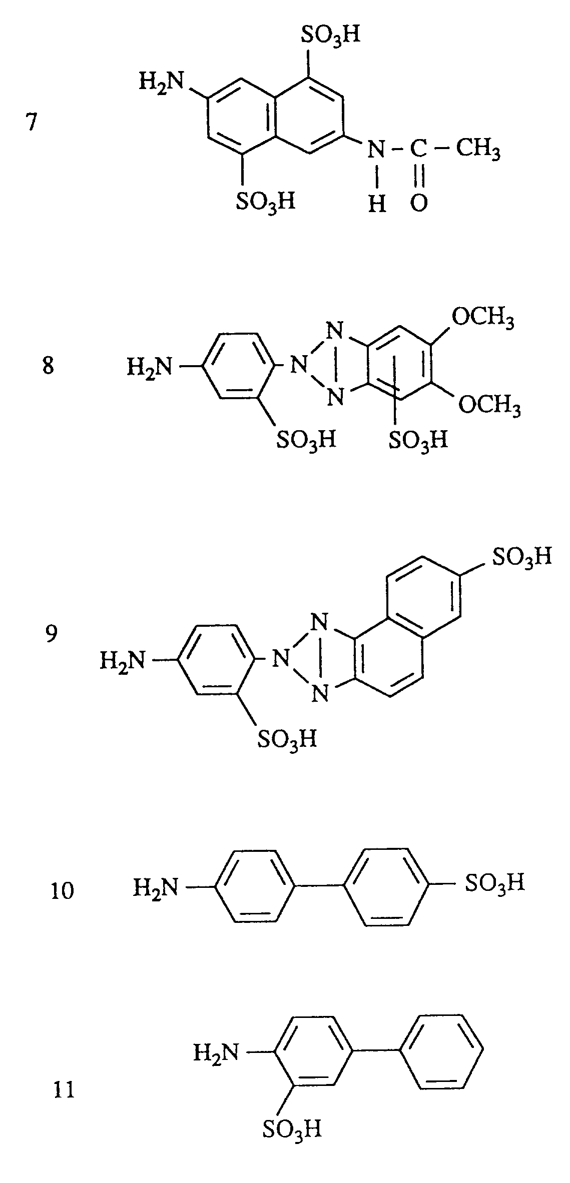

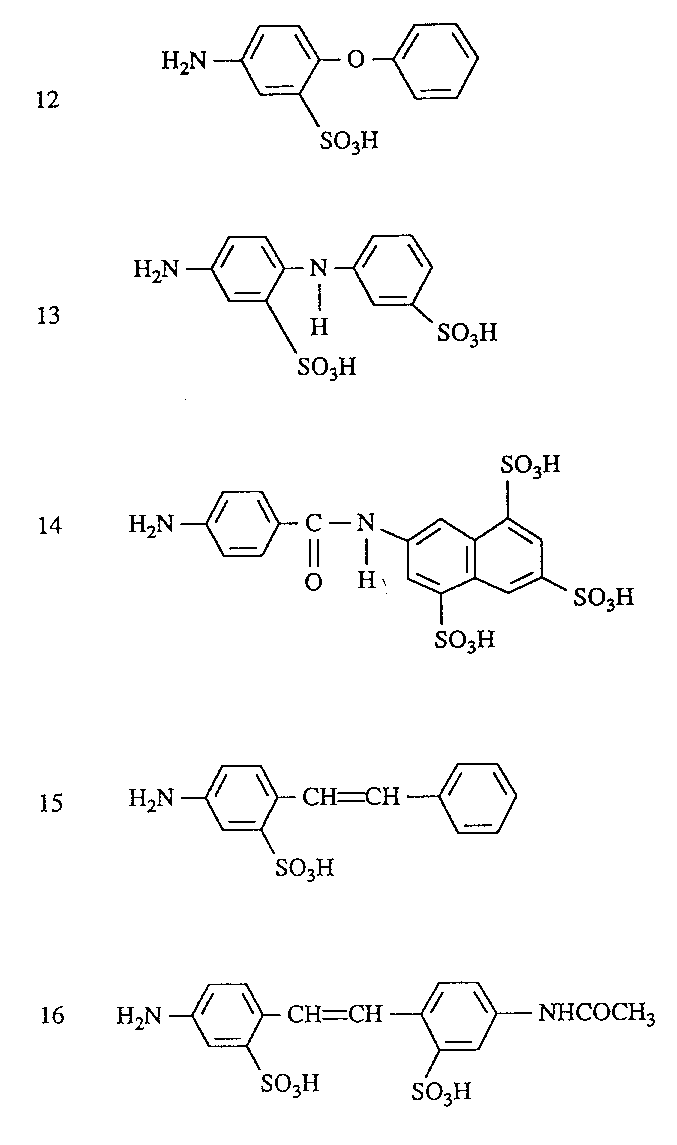

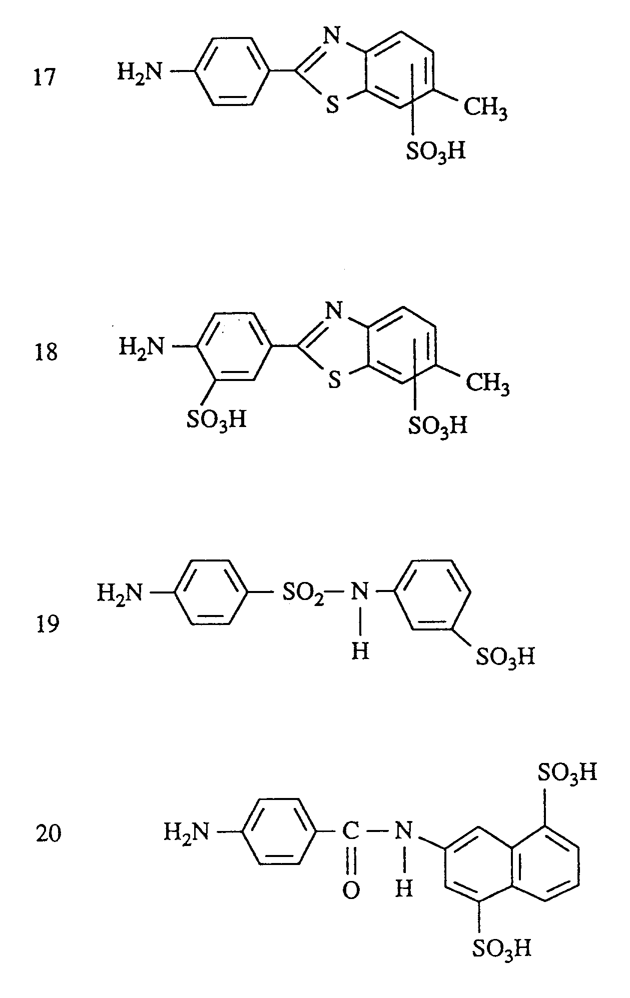

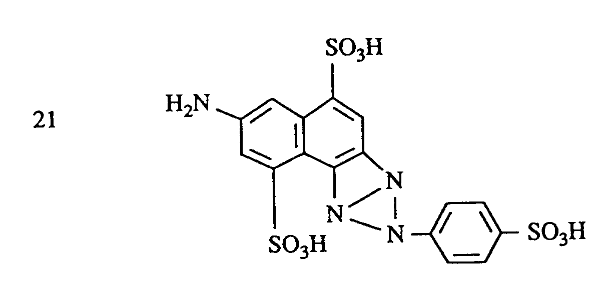

## Patentansprüche

1. Triphendioxazinfarbstoffe der Formel 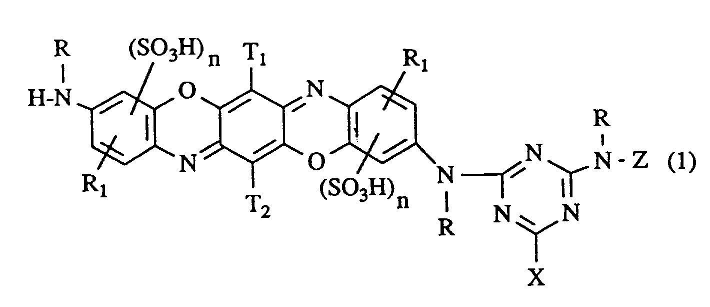 in welcher
R für Wasserstoff oder gegebenenfalls substituiertes C₁-C₆-Alkyl steht,
R₁ für Wasserstoff, Halogen, C₁-C₄-Alkyl, C₁-C₄-Alkoxy oder COOH steht,
T₁ und T₂ jeweils für Wasserstoff, Chlor, Brom, gegebenenfalls substituiertes C₁-C₄-Alkyl, gegebenenfalls substituiertes C₁-C₄-Alkoxy, gegebenenfalls substituiertes Phenyl oder gegebenenfalls substituiertes Phenoxy stehen,
X für einen abspaltbaren Rest steht,
Z für Z₁ oder Z₂ steht, wobei
Z₁ für die Gruppierung 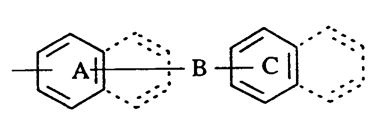 steht,
worin
A für einen gegebenenfalls substituierten Phenylen-oder Naphthylenrest steht und
C für einen gegebenenfalls substituierten Phenyl- oder Naphthylrest steht,
und
B für eine direkte Bindung oder ein Brückenglied der Formel 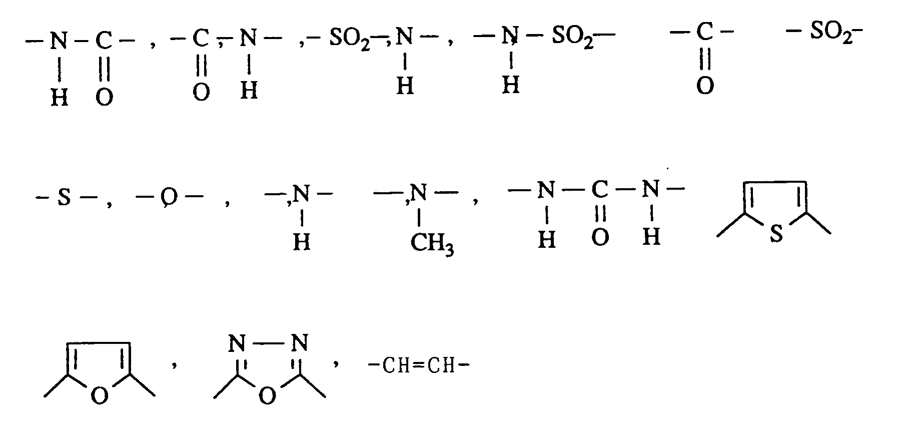 steht,
Z₂ für 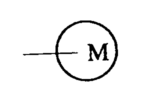 steht,
worin
M für den Rest eines mindestens zwei kondensierte 5- und/oder 6-Ringe enthaltenden heterocyclischen Ringsystems steht,
und
n für 0 oder 1 steht,
wobei für den Fall daß
n für 1 steht, die Sulfogruppen jeweils in orto-Stellung zu den Substituenten 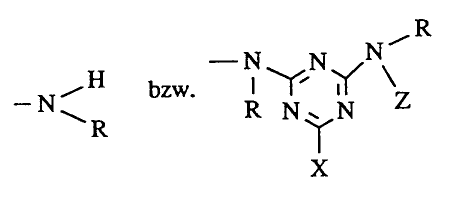 stehen.

2. Triphendioxazinfarbstoffe gemäß Anspruch 1, in welchen
Z₂ für 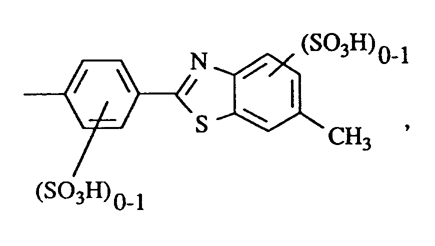 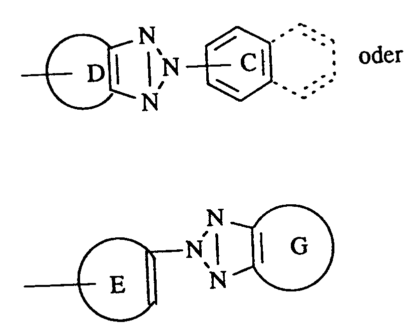 steht,
wobei
C die in Anspruch 1 angegebene Bedeutung hat,
D und E jeweils für den Rest eines gegebenenfalls substituierten Phenylen- oder Naphthylenringes stehen und
G für den Rest eines gegebenenfalls substituierten Benzol- oder Naphthalinringes steht .

3. Verfahren zur Herstellung von Triphendioxazinfarbstoffen gemäß Ansprüchen 1 und 2, dadurch gekennzeichnet, daß Triphendioxazinfarbstoffe der Formel 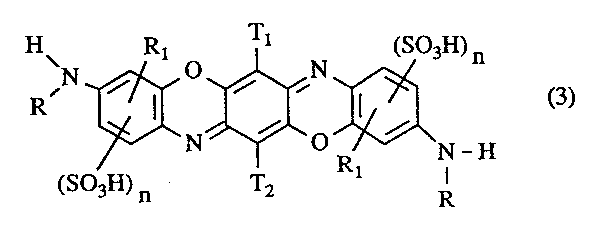 in welcher
R, R₁, T₁, T₂ und n die oben angegebene Bedeutung haben,
Halogentriazine der Formel 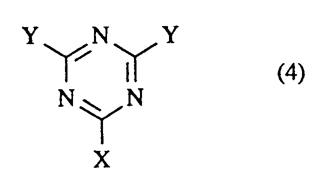 in welcher
Y für Fluor, Chlor oder Brom steht und
X die oben angegebene Bedeutung hat,
und
Amine der Formel 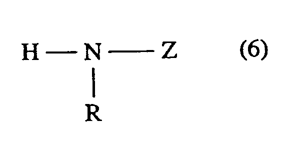 in welcher
R und Z die oben angegebene Bedeutung haben,
in beliebiger Reihenfolge in äquimolaren Mengen kondensiert.

4. Verfahren gemäß Anspruch 3, dadurch gekennzeichnet, daß Farbstoffe der Formel (3) mit Cyanurchlorid zu Farbstoffen der Formel (5) mit X = Chlor kondensiert werden und dann das Chloratom gegen einen Rest -NRZ ausgetauscht wird.

5. Verfahren gemäß den Ansprüchen 3 und 4, dadurch gekennzeichnet, daß es im wäßrigen oder wäßrig-organischen Medium bei Temperaturen zwischen 0°C und 100°C durchgefüht wird.

6. Verfahren gemäß den Ansprüchen 3 bis 5, dadurch gekennzeichnet, daß die Triphendioxazinfarbstoffe der Formel (3) in Form ihrer neutralen Lithiumsalze eingesetzt werden.

7. Verwendung der Triphendioxazinfarbstoffe gemäß den Ansprüchen 1 bis 5, zum Farben cellulosehaltiger Materialien, Wolle, Seide sowie synthetischer Polyamide.

## Claims

1. Triphendioxazine dyestuffs of the formula 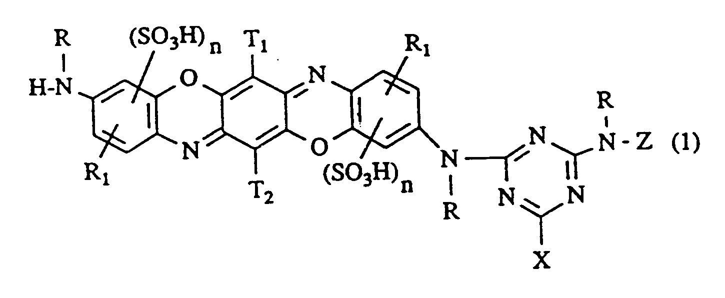 in which
R represents hydrogen or substituted or unsubstituted C₁-C₆-alkyl,
R₁ represents hydrogen, halogen, C₁-C₄-alkyl, C₁-C₄-alkoxy or COOH,
T₁ and T₂ each represent hydrogen, chlorine, bromine, substituted or unsubstituted C₁-C₄-alkyl, substituted or unsubstituted C₁-C₄-alkoxy, substituted or unsubstituted phenyl or substituted or unsubstituted phenoxy,
X represents a detachable radical,
Z represents Z₁ or Z₂, in which
Z₁ represents the grouping 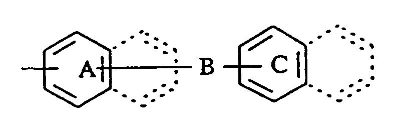
in which
A represents a substituted or unsubstituted phenylene or naphthylene radical and
C represents a substituted or unsubstituted phenyl or naphthyl radical
and
B represents a direct bond or a bridging member of the formula 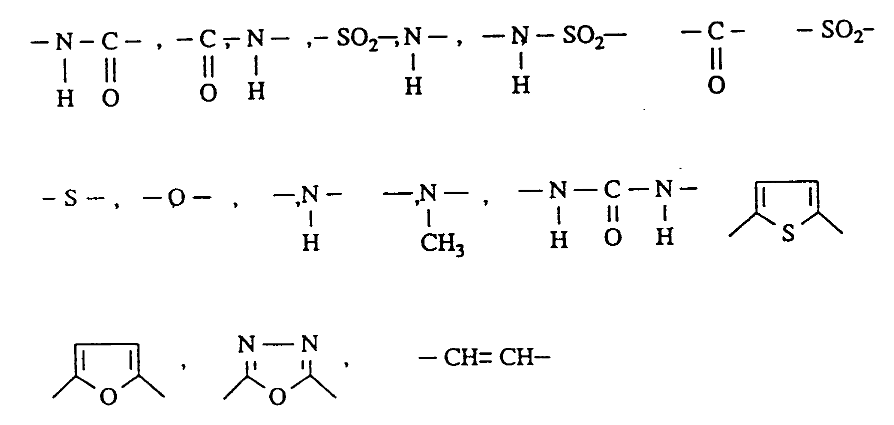
Z₂ represents 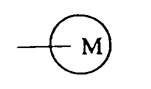
in which
M represents the radical of a heterocyclic ring system containing at least two fused 5- and/or 6-membered rings and
n represents 0 or 1,
with the proviso that, if
n represents 1, the sulpho groups are in each case in the ortho-position relative to the substituents

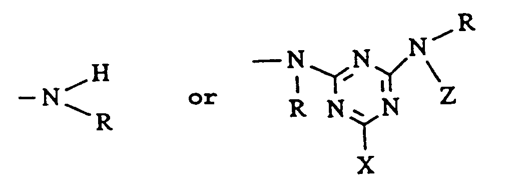

2. Triphendioxazine dyestuffs according to Claim 1, in which
Z₂ represents 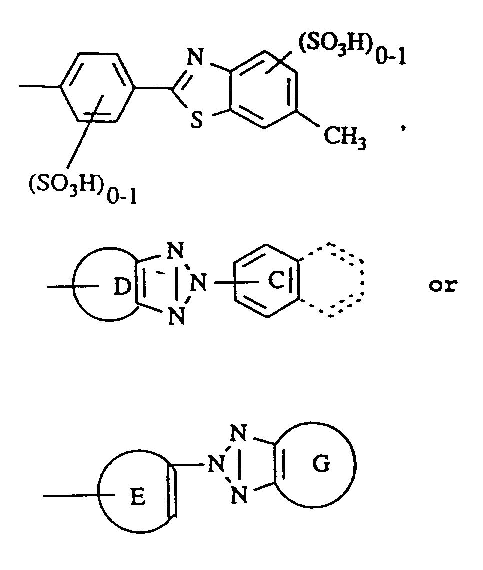
in which
C has the meaning given in Claim 1,
D and E each represent the radical of a substituted or unsubstituted phenylene or naphthylene ring and
G represents the radical of a substituted or unsubstituted benzene or naphthalene ring.

3. Process for the preparation of triphendioxazine dyestuffs according to Claims 1 and 2, characterized in that triphendioxazine dyestuffs of the formula 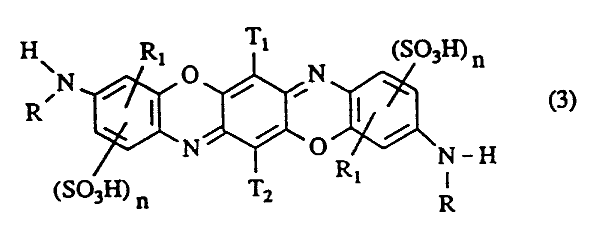 in which
R, R₁, T₁, T₂ and n have the abovementioned meaning,
halogenotriazines of the formula 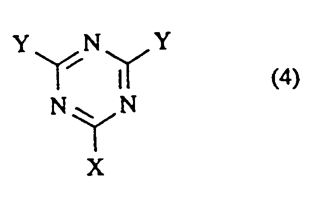 in which
Y represents fluorine, chlorine or bromine and
X has the abovementioned meaning,
and
amines of the formula 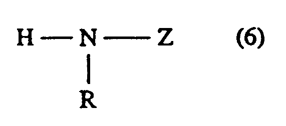
in which
R and Z have the abovementioned meaning,
are condensed in any desired order in equimolar amounts.

4. Process according to Claim 3, characterized in that dyestuffs of the formula (3) are condensed with cyanuric chloride to give dyestuffs of the formula (5) where X is chlorine and the chlorine atom is then exchanged for a radical -NRZ.

5. Process according to Claims 3 and 4, characterized in that it is carried out in aqueous or aqueous-organic medium at temperatures between 0°C and 100°C.

6. Process according to Claims 3 to 5, characterized in that the triphendioxazine dyestuffs of the formula (3) are used in the form of their neutral lithium salts.

7. Use of the triphendioxazine dyestuffs according to Claims 1 to 5 for the dyeing of cellulose-containing materials, wool, silk and synthetic polymides.

## Revendications

1. Colorants de triphénodioxazines de formule 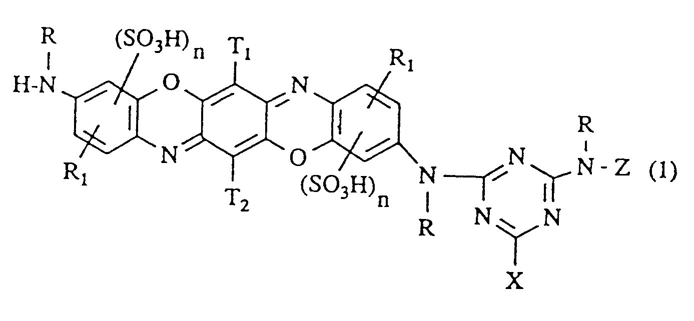 dans laquelle
R représente l'hydrogène ou un groupe alkyle en C₁-C₆ éventuellement substitué, R₁ représente l'hydrogène, un halogène, un groupe alkyle en C₁-C₄, alcoxy en C₁-C₄ ou COOH,
T₁ et T₂ représentent chacun l'hydrogène, le chlore, le brome, un groupe alkyle en C₁-C₄ éventuellement substitué, un groupe alcoxy en C₁-C₄ éventuellement substitué, un groupe phényle éventuellement substitué ou un groupe phénoxy éventuellement substitué,
X représente un substituant scindable,
Z représente Z₁ ou Z₂,
Z₁ représentant le groupement 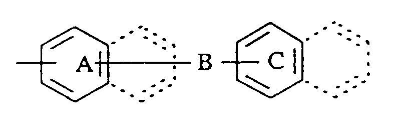 dans lequel
A représente un groupe phénylène ou naphtylène éventuellement substitué et
C représente un groupe phényle ou naphtyle éventuellement substitué et
B représente une liaison directe ou un pont de formule 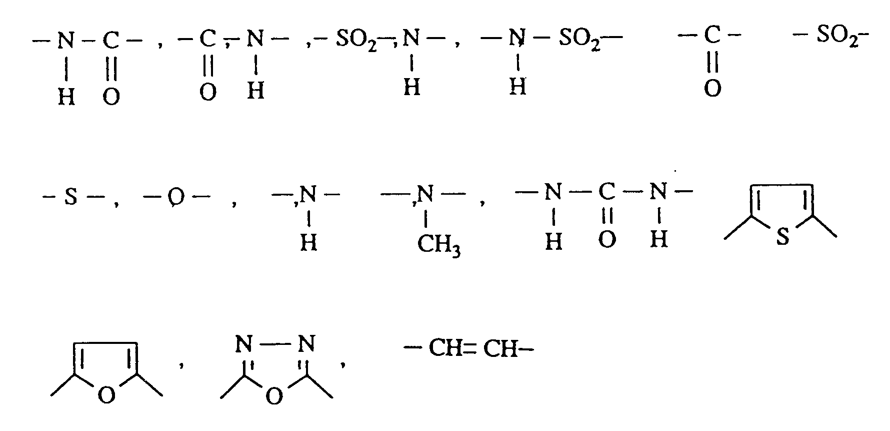 Z₂ représentant 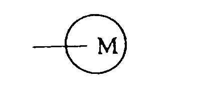 dans lequel
M représente le radical d'un système hétérocyclique contenant au moins deux cycles condensés à 5 et/ou 6 chaînons et
n est égal à 0 ou 1,
et, dans le cas où n = 1, les groupes sulfo se trouvent chacun en position ortho des substituants respectifs

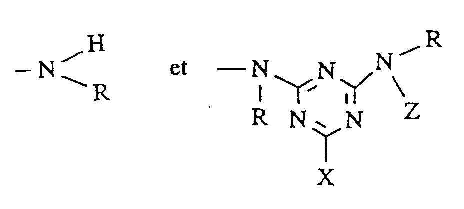

2. Colorants de triphénodioxazines selon la revendication 1, dans lesquels Z₂ représente 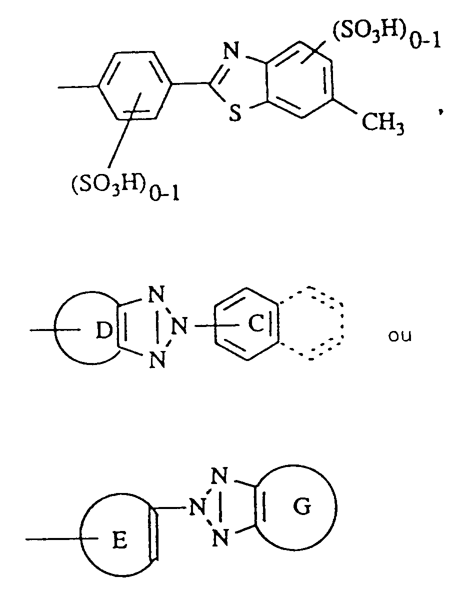 C ayant les significations indiquées dans la revendication 1,
D et E représentant chacun le radical d'un cycle phénylène ou naphtylène éventuellement substitué et
G le radical d'un cycle benzénique ou naphtalénique éventuellement substitué.

3. Procédé de préparation des colorants de triphénodioxazines selon les revendications 1 et 2, caractérisé en ce que l'on condense dans un ordre quelconque et en quantités équimoléculaires des colorants de triphénodioxazines de formule 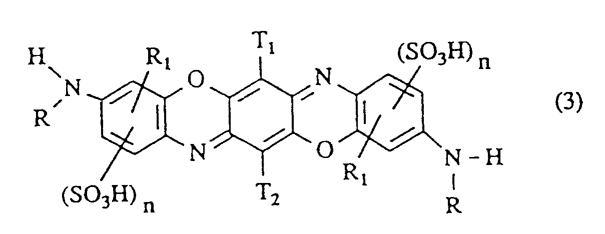 dans laquelle R, R₁, T₁, T₂ et n ont les significations indiquées ci-dessus, des halogénotriazines de formule 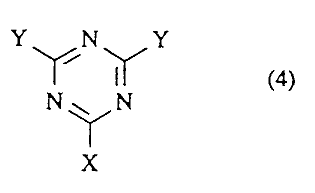 dans laquelle
Y représente le fluor, le chlore ou le brome et
X a les significations indiquées ci-dessus,
et
des amines de formule 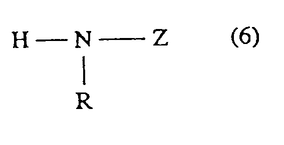 dans laquelle
R et Z ont les significations indiquées ci-dessus,

4. Procédé selon la revendication 3, caractérisé en ce que l'on condense les colorants de formule 3) avec le chlorure de cyanuryle, ce qui donne des colorants de formule 5) dans laquelle X représente le chlore, puis on échange cet atome de chlore contre un substituant -NRZ.

5. Procédé selon les revendications 3 et 4, caractérisé en ce que l'on opère en milieu aqueux ou hydro-organique à des températures de 0 à 100°C.

6. Procédé selon les revendications 3 à 5, caractérisé en ce que les colorants de triphénodioxazines de formule 3) sont mis en oeuvre à l'état de sels de lithium neutres.

7. Utilisation des colorants de triphénodioxazines selon les revendications 1 à 5 pour la teinture de matières cellulosiques, de la laine, de la soie et de polyamides synthétiques.
